# EUROPEAN PATENT SPECIFICATION

(11) **EP 3 908 879 B1**
(45) Date of publication and mention of the grant of the patent: **04.12.2024**
(21) Application number: 19908986.3
(22) Date of filing: 26.12.2019
(51) Int. Cl.: G02C 5/14, G02C 11/00, G02C 5/00

(54) **A UNIVERSAL BUOYANCY DEVICE FOR SPECTACLES**
UNIVERSELLE AUFTRIEBSVORRICHTUNG FÜR BRILLEN
DISPOSITIF DE FLOTTAISON UNIVERSEL POUR LUNETTES

(30) Priority: 07.01.2019 IL 26413219
(43) Date of publication of application: 17.11.2021
(73) Proprietor: Roimi, Moshe, 4906507 Petah Tikva (IL)
(72) Inventor: ROIMI, Avi, 3050817 Binyamina (IL); ROIMI, Moshe, 4906507 Petah Tikva (IL)
(74) Representative: Ottazzo, Marco Francesco Agostino
(86) International application number: PCT/IL2019/051412
(87) International publication number: WO 2020/144671

(56) References cited:
- KR-A- 20160 072 679
- US-A- 3 038 375
- US-A- 3 711 190
- US-A1- 2012 033 410
- US-A1- 2014 160 421
- US-A1- 2018 042 369
- US-B1- 6 860 596
- US-B1- 9 903 682

## Description

### Field of the invention

The invention is in the field of buoyancy devices. More particularly, the present invention relates to a universal buoyancy device for spectacles.

### Background of the invention

Spectacles are in a common use for health, convenience and fashion reason. Unfortunately, many spectacles are lost during outdoor activities, which can be both dangerous (i.e., losing sun shading or optical aid at sea) and highly frustrating, especially during maritime activities where the retrieval of lost items is nearly impossible.

The prior art proposes hollow buoyancy devices which are slipped over the spectacle's temples, or devices with rigid or elastic bands which slips over the temples. For example, document US-A-3711190 discloses a prior art buoyancy device for spectacles including a blow moulded air cell made of a resilient plastic material and having a pair of integral moulded loops at its opposite ends. Other devices dangle on straps with sleeves that are slipped over said temple's free edges. Adapting a single device of the prior art to multiple spectacles of different designs does not provide with the required securement for tough conditions, while devices of the prior art which provide sufficient securement, are unadaptable to multiple spectacles of different temple's sizes and shapes, which induce redundant costs to consumers who replace spectacles or use more than one pair of spectacles.

Additionally, since said spectacles are mostly in general use and not only during maritime activity, the buoyancy aiding device is required to be easily installed and removed. Newer solutions of the prior art with embedded floating elements or with a frame molded with air cavities / bubbles, are expensive, unadaptable to differently designed spectacles and cannot be removed.

The objective of the present invention is to provide with a single low-cost device, which is easily installed and secured on differently designed spectacle's temples, thus overcoming the shortcoming of the prior art.

It is yet another objective of the present invention to provide with a protruding buoyancy device, which can be easily located and retrieved while floating at sea level, yet easily removable, to allow the regular use of same spectacles of unaffected original design.

### Summary of the Invention

The present invention is a universal buoyancy device for spectacles, comprising:
- a buoyancy element;
- a round cross-sectional elastic strap;
wherein said elastic strap is embedded in two crossing channels within said buoyancy element, leaving two free loops on said element's extremities, allowing a limited sliding capability of said strap when a free loop is pulled during attachment to spectacles' temple, while said element's shape ensure a gap between said channels to the spectacles' temple, ensuring residual stress within said strap and therefore a firm securement to said spectacles.

According to the invention, the buoyancy element is of ellipse shape, wherein said elliptical shape of the buoyancy element creates an ellipse contour of the crossing channels at the perimeter of the buoyancy element, allowing an easy expansion of the free loops during securement to spectacles' temple.

According to an embodiment of the invention, the buoyancy element is constructed of a single piece molded foam material.

According to an embodiment of the invention, the buoyancy element is made of a closed cell cross-linked polyethylene foam block.

According to an embodiment of the invention, the buoyancy element is comprised of two parts.

According to an embodiment of the invention, the buoyancy element is comprised of additional plate, e.g., that is designed with noticeable painting, a commercial logo, or any desired graphics and/or text, attached to its outwards facing surface.

According to an embodiment of the invention, the buoyancy element is comprised of a socket allowing the smooth adaption of an additional plate, e.g., that is designed with a noticeable painting or a commercial logo.

### Brief Description of the Drawings

- Fig. 1 schematically illustrates a perspective view of a buoyancy device for spectacles, according to an embodiment of the invention;
- Fig. 2 schematically illustrates a partial perspective view of a strap and sectioned buoyancy element of the buoyancy device of Fig. 1, according to an embodiment of the present invention;
- Figs. 3A-3C schematically illustrate a top view of an attachment sequence of the buoyancy device of Fig. 1 to a spectacles' temple; and
- Fig. 4 schematically illustrates a perspective view of another embodiment of the present invention.

### Detailed description of the drawings

The present invention relates to a buoyancy device, which is comprised of a lightweight buoyancy element (i.e., constructed of low density material) with two parallel crossing channels, through which a round cross sectional elastic strap is adapted, leaving two free loops on both sides of said body.

The fitment between said strap to said crossing channels allows a limited sliding capability of said strap when pulled from one of said device's extremity, extending the loop perimeter at one side of said body (thus reducing the loop perimeter on the other side) to allow an easy sliding of said device on a spectacle's temple, then pulling the other side of strap (thus reducing the loop on the first side) to allow the sliding of the second half-rounded loop over said temple, to be followed by sliding said device to its final position and balancing the tension of between both loops, to ensure the grasp of said temple by both loops.

The geometric shape of said buoyancy element keeps the aforesaid crossing channels at a certain distance from the spectacles' temple, to ensure residual stress within the strap and therefore a firm securement to said spectacles.

All the above will be better understood through the following illustrative and non-limitative examples.

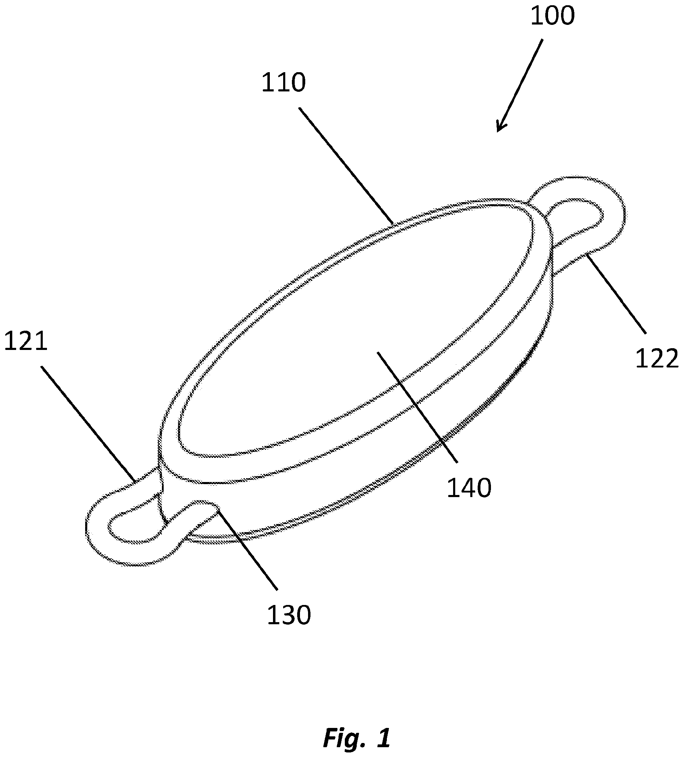

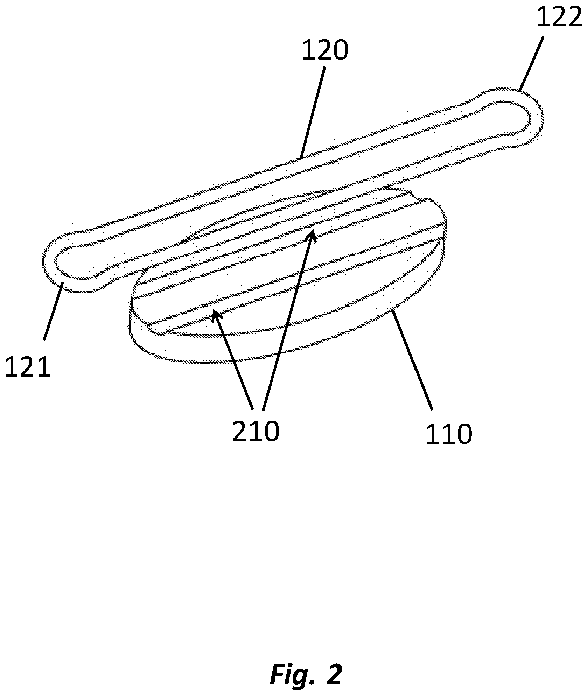

Fig. 1 shows a perspective view of an embodiment of the present invention, in which the invented device 100 is comprised of ellipse shaped buoyancy element 110 of a single piece molded foam material with a high buoyancy capacity and a flexible strap 120 (shown in Fig. 2), which is embedded within two parallel channels 210 (shown in Fig. 2) crossing said buoyancy element 110, while leaving free excess loops 121 and 122 on said element's 110 extremities. The elliptical shape of said element 110 creates an ellipse contour 130 of said channels 210 at the perimeter of said element, allowing an easy expansion of the free loops 121 and 122 during securement to spectacles' temple. For example, the foam material can be made of a closed cell cross-linked polyethylene foam block, such as PalFoam or PA30 by Palziv.

Fig. 2 shows a partial perspective view of a strap and sectioned buoyancy element, according to an embodiment of the present invention, in which two parallel channels 210, in which said strap 120 is embedded are crossing said buoyancy element 110.

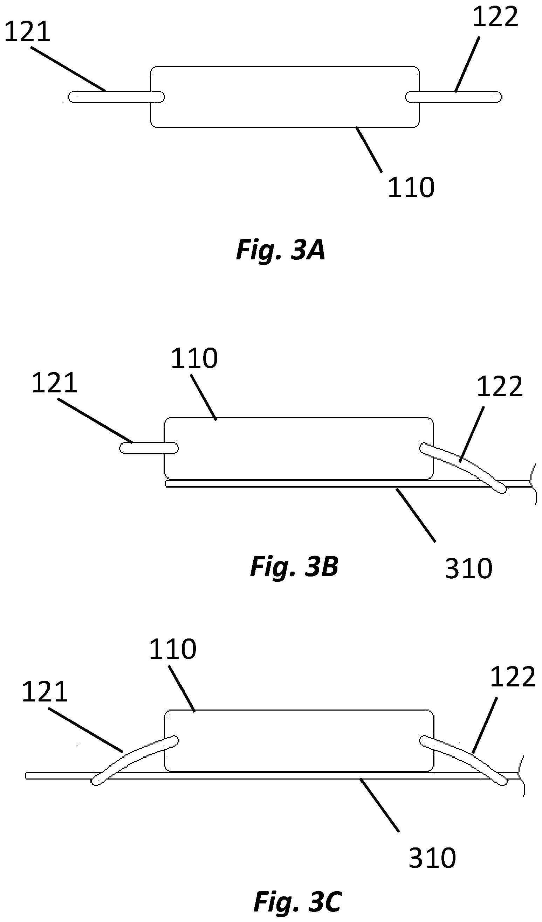

Figs. 3A thru 3C shows a top illustration of the invented device's attachment to a spectacles' temple, according to an embodiment of the present invention, in which two free loops 121 and 122 of strap 120 (shown in Fig. 2) are on both sides of said buoyancy element 110 and the attachment to a spectacles' temple 310 begins (see Fig. 3B) with the extension of the free loop 122 (thus reducing the second loop 121) to allow a smooth sliding on temple 310. As soon as loop 122 confines temple 310, the other free loop 121 is extended moderately to allow its easy sliding onto temple 310. The last step is balancing the tension on both loops 121 and 122 thus ensuring evenly securement to temple 310.

According to another embodiment of the present invention, the invented device is attached to spectacles with fashionable thin temples, where the flexibility of strap 120 enable further folding of free loop 121 to form at least two overlapping securement loops onto spectacle's thin temple and the same with free loop 122 as required.

One could obviously realize that the smooth surface 140 of device 100 of Fig. 1 allows the attachment (e.g., by adhesion) of a suitable plate designed for example with a noticeable design, or a desirable commercial logo, which can be applied in multiple embodiments of the present invention.

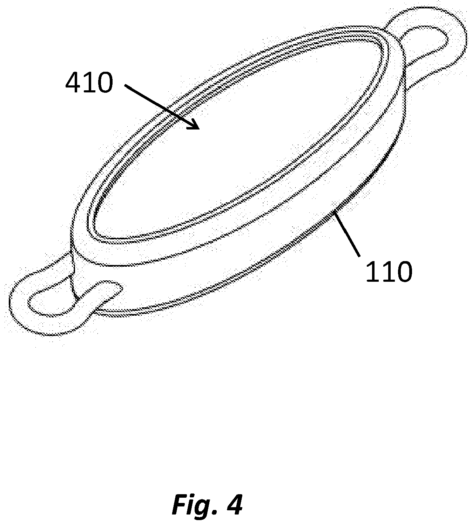

Fig. 4 shows a perspective view of yet another embodiment of the present invention, in which aforesaid buoyancy element 110, is comprised of a socket 410 into which an additional plate designed with a noticeable painting or a commercial logo can be embedded, thus further easing on the locating of spectacles floating at sea surface.

Although embodiments of the invention have been described by way of illustration, it will be understood that the invention may be carried out with many variations, modifications, and adaptations of shapes and materials, without exceeding the scope of the claims.

## Claims

1. A universal buoyancy device (100) for spectacles, comprising:
a) a buoyancy element (110);
b) a round cross-sectional elastic strap (120);
wherein said elastic strap (120) is embedded in two crossing channels (210) within said buoyancy element (110), leaving two free loops (121, 122) on said buoyancy element's extremities, allowing a limited sliding capability of said elastic strap (120) when a free loop (121, 122) is pulled during attachment to spectacles' temple (310), while said buoyancy element's shape ensure a gap between said channels (210) to the spectacles' temple (310), ensuring residual stress within said elastic strap (120) and therefore a firm securement to said spectacles, wherein said buoyancy element (110) is of elliptical shape, and wherein said elliptical shape of said buoyancy element (110) creates an ellipse contour (130) of said crossing channels (210) at the perimeter of said buoyancy element (110), allowing an easy expansion of the free loops (121, 122) during securement to spectacles' temple (310).

2. The device (100) of claim 1, in which the buoyancy element (110) is constructed of a single piece molded foam material.

3. The device (100) of claim 1, in which the buoyancy element (110) is made of a closed cell cross-linked polyethylene foam block.

4. The device (100) of claim 1, in which the buoyancy element (110) is comprised of two parts.

5. The device (100) of claim 1, in which the buoyancy element (110) is comprised of an additional plate attached to its outwards facing surface (140), wherein said plate adapted for displaying a desired graphics and/or text.

6. The device (100) of claim 1, in which the buoyancy element is comprised of a socket (410) allowing the smooth adaption of an additional plate, wherein said plate adapted for displaying a desired graphics and/or text.

## Patentansprüche

1. Eine universelle Auftriebsvorrichtung (100) für Brillen, umfassend:
a) ein Auftriebselement (110),
b) ein im Querschnitt rundes elastisches Band (120);
wobei das elastische Band (120) in zwei sich kreuzende Kanäle (210) innerhalb des Auftriebselements (110) eingebettet ist, wobei zwei freie Schlaufen (121, 122) an den Enden des Auftriebselements verbleiben, was eine begrenzte Gleitfähigkeit des elastischen Bands (120) ermöglicht, wenn eine freie Schlaufe (121, 122) beim Befestigen an dem Brillenbügel (310) gezogen wird, während die Form des Auftriebselements einen Spalt zwischen den Kanälen (210) und dem Brillenbügel (310) gewährleistet, wodurch eine Restspannung innerhalb des elastischen Bands (120) und daher eine feste Befestigung an der Brille gewährleistet wird, wobei das Auftriebselement (110) von elliptischer Form ist, und wobei die elliptische Form des Auftriebselements (110) eine Ellipsenkontur (130) der sich kreuzenden Kanäle (210) an dem Umfang des Auftriebselements (110) erzeugt, die eine einfache Ausdehnung der freien Schlaufen (121, 122) beim Befestigen an dem Brillenbügel (310) ermöglicht.

2. Vorrichtung (100) nach Anspruch 1, wobei das Auftriebselement (110) aus einem einteilig, geformten Schaumstoffmaterial aufgebaut ist.

3. Vorrichtung (100) nach Anspruch 1, wobei das Auftriebselement (110) aus einem geschlossenzelligen, vernetzten Polyethylenschaumstoffblock gefertigt ist.

4. Vorrichtung (100) nach Anspruch 1, wobei das Auftriebselement (110) aus zwei Teilen besteht.

5. Vorrichtung (100) nach Anspruch 1, wobei das Auftriebselement (110) aus einer zusätzlichen Platte besteht, die an seiner nach außen weisenden Oberfläche (140) angebracht ist, wobei die Platte zum Anzeigen einer gewünschten Grafik und/oder eines Textes angepasst ist.

6. Vorrichtung (100) nach Anspruch 1, wobei das Auftriebselement aus einem Sockel (410) besteht, der die reibungslose Anpassung einer zusätzlichen Platte ermöglicht, wobei die Platte zum Anzeigen einer gewünschten Grafik und/oder eines Textes angepasst ist.

## Revendications

1. Cordon de lunettes flottant universel (100), comprenant :
a) un élément flottant (110) ;
b) une sangle élastique transversale ronde (120) ;
dans lequel ladite sangle élastique (120) est intégrée dans deux canaux transversaux (210) à l'intérieur dudit élément flottant (110), ce qui permet de laisser deux boucles libres (121, 122) aux extrémités dudit élément flottant, offrant ainsi une capacité de glissement limitée de ladite sangle élastique (120) lorsqu'une boucle libre (121, 122) est tirée pendant la fixation aux branches des lunettes (310), tandis que la forme dudit élément flottant crée un espace entre lesdits canaux (210) et les branches des lunettes (310), en assurant une contrainte résiduelle dans ladite sangle élastique (120) et donc une fixation ferme auxdites lunettes, dans lequel ledit élément flottant (110) est de forme elliptique, et dans lequel ladite forme elliptique dudit élément flottant (110) crée un contour en ellipse (130) desdits canaux transversaux (210) au périmètre dudit élément flottant (110), permettant une expansion facile des boucles libres (121, 122) lors de la fixation aux branches des lunettes (310).

2. Dispositif (100) selon la revendication 1, dans lequel l'élément flottant (110) est constitué d'une seule pièce de mousse moulée.

3. Dispositif (100) selon la revendication 1, dans lequel l'élément flottant (110) est constitué d'un bloc de mousse de polyéthylène réticulé à cellules fermées.

4. Dispositif (100) selon la revendication 1, dans lequel l'élément flottant (110) comprend deux parties.

5. Dispositif (100) selon la revendication 1, dans lequel l'élément flottant (110) comprend une plaque supplémentaire fixée à sa surface extérieure (140), dans lequel ladite plaque étant adaptée pour afficher un graphique et/ou un texte au choix.

6. Dispositif (100) selon la revendication 1, dans lequel l'élément flottant comprend une prise (410) permettant d'adapter en douceur une plaque supplémentaire, dans lequel ladite plaque étant adaptée pour afficher un graphisme et/ou un texte au choix.
